# EUROPÄISCHE PATENTSCHRIFT

(11) **EP 2 795 131 B1**
(45) Veröffentlichungstag und Bekanntmachung des Hinweises auf die Patenterteilung: **23.03.2016**
(21) Anmeldenummer: 12797822.9
(22) Anmeldetag: 27.11.2012
(51) Int. Cl.: F04C 25/02, F04C 28/06

(54) **VERFAHREN ZUR ANLAUFSTEUERUNG EINER ELEKTRISCHEN UNTERDRUCKPUMPE**
METHOD FOR THE START-UP CONTROL OF AN ELECTRIC VACUUM PUMP
PROCÉDÉ DE COMMANDE DU DÉMARRAGE D'UNE POMPE ÉLECTRIQUE À DÉPRESSION

(30) Priorität: 19.12.2011 DE 102011088974
(43) Veröffentlichungstag der Anmeldung: 29.10.2014
(73) Patentinhaber: Continental Automotive GmbH, 30165 Hannover (DE)
(72) Erfinder: KALBECK, Alexander, 93133 Burglengenfeld (DE); SCHICKE, Jürgen, 93309 Kelkheim (DE); MÄRKL, Christian, 93192 Wald (DE)
(86) Internationale Anmeldenummer: PCT/EP2012/073734
(87) Internationale Veröffentlichungsnummer: WO 2013/092132

(56) Entgegenhaltungen:
- DE-A1- 10 021 479
- DE-A1- 19 647 940
- JP-A- H07 167 072
- US-A- 5 518 373

## Beschreibung

Die Erfindung betrifft ein Verfahren zur Steuerung des Anlaufes einer elektrischen Unterdruckpumpe für ein Unterdrucksystem eines Fahrzeuges.

Aus dem Stand der Technik sind elektrische Vakuumpumpen (Unterdruckpumpen) bekannt, die in Fahrzeugen (PKWs) die konventionellen Methoden (Unterdruck durch Motoransaugung bei Benzinmotoren bzw. mechanische Unterdruckpumpen bei Dieselmotoren) ersetzen oder ergänzen. Dieser Unterdruck wird in den Fahrzeugen u.a. zur Bremskraftunterstützung/-Verstärkung benötigt.

Eines der Gründe für den Einsatz eines elektrischen Unterdruckversorgungssystems ist ein deutlich niedrigerer Energieverbrauch, da die Pumpenenergie nur bei tatsächlichem Unterdruckbedarf bereitgestellt wird.

Aus Sicherheitsgründen muß in dem elektrischen Unterdruckversorgungssystem ebenso wie bei anderen Systemen zu jeder Zeit der Unterdruck zur Verfügung gestellt werden können. Daher ist es notwendig, die elektrische Unterdruckpumpe jederzeit korrekt betreiben zu können; dies umfaßt insbesondere einen Unterdruckpumpenanlauf.

Aufgrund verschiedener Rahmenbedingungen kann es bei unterschiedlichen Betriebssituationen zu verändertem dynamischen Verhalten des Unterdruckpumpenanlaufs kommen.

Beispielsweise kann in bestimmten Situationen die Unterdruckpumpe "schwergängiger" Anlaufen, was aufgrund der elektrischen Ansteuerung zu einem erhöhtem Anlaufstrom führt. Dies wiederum führt zu einer erhöhten thermischen Energiefreisetzung bei der ansteuernden elektronischen Einheit (z.B. Relaisbox, ECU, ... ).

Diese Energiedissipation muß bei der Auslegung der ansteuernden Elektronikeinheit im Design mitberücksichtigt werden (Bauteilauswahl, Platinen Layout) aber auch bei der Auslegung des Versorgungssystems (beispielsweise Generator, Batterie, Leitungen).

Derzeitige Systeme legen die Bauteile bzw. Versorgungssystem für den "worst case"-Bedarf aus. Dies bedeutet allerdings:
a) hohe Kosten aufgrund der erhöhten Anforderungen an die Bauteile und
b) geringere Lebensdauer aufgrund höherer Beanspruchung.

Die Druckschrift JP H07 167072 A offenbart ein Verfahren zur Steuerung eines Anlaufes einer elektrischen Ünterdruckpumpe, das unabhängig von Umgebungs- und/oder Betriebsparametern der ünteraruckpumpe angewendet werden kann. Dazu wird die Stromversorgung der Unterdruckpumpe bei jeder Anlaufphase mehrfach unterbrochen. In Fällen, in denen auch ein ungeregeltes Anlaufen möglich wäre, führt dies jedoch zu einem unnötig hohen Energieverbrauch.

Die Druckschrift DE 100 21 479 A1 sieht vor, dass der zur Betätigung einer elektrischen Pumpe genutzte elektrische Antrieb eine Vorrichtung aufweist, mit der die hohen Anlaufstromspitzen beim Anschalten des elektrischen Antriebes reduziert werden können. Die zusätzliche Vorrichtung verursacht dabei allerdings zusätzliche Kosten und bewirkt, dass der elektrische Antrieb deutlich langsamer anläuft, was eine reduzierte Pumpwirkung zur Folge hat.

Es ist daher Aufgabe der Erfindung, ein Verfahren zur Anlaufsteuerung einer derartigen elektrischen Unterdruckpum-pe anzugeben, welches bei möglichst geringem Energieverbrauch in der Anlaufphase keine nennenswert erhöhten Anforderungen an die Bauteile zur Ansteuerung der Unterdruckpumpe beim Anlaufen stellt.

Diese Aufgabe wird erfindungsgemäß durch die Merkmale des unabhängigen Hauptanspruchs gelöst.

Es ist erfindungsgemäß alternativ ein Anlaufen der elektrischen Unterdruckpumpe in einem Standardmodus oder wenigstens einem Sondermodus vorgesehen.

Der Standardmodus entspricht dabei der normalen Betriebsweise, in der die Unterdruckpumpe ohne besondere Steuerung, Regelung oder Taktung an eine Versorgungsspannung geschaltet wird.

In dem Sondermodus wird die Unterdruckpumpe jedoch nicht ununterbrochen, sondern getaktet, also zeitweise in Intervallen, an die Versorgungsspannung geschaltet. Damit wird ein (im Mittel) deutlich niedriger Strom beim Anlaufen der Unterdruckpumpe erzielt als bei einem Anlaufen im Standardmodus.

Die Auswahl zwischen beiden Anlauf-Modi wird erfindungsgemäß anhand von Umgebungsparametern (beispielsweise Temperatur) und/oder Betriebsparametern der Unterdruckpumpe (beispielsweise vorherige Stillstandszeit) vorgenommen.

Würden diese zu einem Anlaufen im Standardmodus mit unerwünscht hoher Stromaufnahme führen, wird zum Anlaufen nicht der Normale Modus sondern der (oder einer der) Sondermodus(/-modi) gewählt und somit die Stromaufnahme gegenüber dem Standardmodus reduziert.

Mittels dieses erfindungsgemäßen Verfahrens wird die aufgewendete Energie deutlich reduziert, jedoch das Unterdruckpumpensystem gleichzeitig so beansprucht, dass das Unterdruckpumpensystem sich z.B. erwärmt und wieder in normale Betriebsparameter übergeht.

Gemäß Ausgestaltungen der Erfindung können vorteilhaft folgende Parameter als Umgebungsparameter und/oder Betriebsparameter eingesetzt werden, wobei diese einzeln, aber auch in Kombinationen einsetzbar sind:
Es wird ein Anlauf im Sondermodus durchgeführt falls:
   a) die Temperatur der Unterdruckpumpe kleiner als ein Schwellwert T_p ist,
   b) die Temperatur der ECU bzw. der elektronischen Steuerung (Motorsteuerung/ Unterdruckpumpenmotorsteuerung) kleiner als ein Schwellwert T_e ist,
   c) die Temperatur von Leistungstreiber(n) zur Ansteuerung der Unterdruckpumpe größer als ein Schwellwert T_l ist,
   d) die Standzeit der Unterdruckpumpe länger als ein Schwellwert T_sz ist,
   e) eine Wakeup Management Info angibt, daß die Unterdruckpumpe nach Aufwachen oder Klemmenwechsel noch nicht betrieben wurde,
   f) die Umgebungstemperatur kleiner als ein Schwellwert T_u ist,
   g) die aktuelle Anlaufgeschwindigkeit bei Unterdruckpumpenstart unterhalb eines Schwellwertes V_p liegt
   h) der gemessene Unterdruck unterhalb eines Schwellwerts p_vac_th liegt,
   i) der aktuelle Unterdruckgradient bei Unterdruckpumpenstart oberhalb eines Schwellwertes p_vac_grad_th liegt.

Als relevante Parameter für die Auswahl des Modus zum Anlaufen der Unterdruckpumpe dienen also insbesondere: Temperatur der Unterdruckpumpe, Temperatur der ECU, Temperatur der Leistungstreiber, Standzeit der Unterdruckpumpe, Wakeup-Management Info, Umgebungstemperatur, Anlaufgeschwindigkeit der Unterdruckpumpe (z.B. durch Hallsensor oder Modell bestimmt z.B. durch einen aktuellen Stromverbrauch der Unterdruckpumpe bzw. einen Unterdruckpumpenstrom), gemessener Unterdruck, Gradient des Unterdrucks. Alle diese angeführten Bedingungen können in beliebiger Weise (und/oder) verknüpft werden.

Es ist anzumerken, dass für alle diese Betrachtungen der Unterdruck negativ zu betrachten ist, d.h. ein höherer Unterdruck bedeutet eine höhere Druckdifferenz zum Umgebungsdruck und ein negativer Unterdruckgradient bedeutet einen Aufbau des Unterdrucks.

Gemäß weiteren vorteilhaften Ausgestaltungen der Erfindung können die jeweiligen Schwellwerte ggf. auch in verschieden gestufte Schwellwerte erweitert werden, die zu jeweils verschiedenen Anlaufmodi führen.

Ebenso können verschiedene Kombinationen der Bedingungen zu verschiedenen Anlaufmodi führen.

Gemäß weiteren vorteilhaften Ausgestaltungen der Erfindung soll der Sondermodus verlassen werden sobald:
a) eine Ansteuerung der Unterdruckpumpe im Sondermodus für eine Dauer T_enh bereits erfolgt ist,
b) eine Indikation im System vorliegt daß die Unterdruckpumpe innerhalb normaler Parameter läuft z.B. durch Unterdruckpumpendrehzahl, aktuellen Strom / Stromverlauf Unterdruckpumpentemperatur, Unterdruck / Unterdruckgradient und/oder
c) Eine Anforderung des Unterdruckpumpenlauf nicht mehr Alle oben angeführten Bedingungen können in beliebiger Weise (und/oder) verknüpft werden.

Die Unterdruckpumpenanlaufsteuerung (der Begriff Steuerung kann immer auch eine Regelung umfassen) wird je nach gewähltem Sondermodus gewählt. Dabei ist im Standardmodus immer von einem einfachen aktivieren der Unterdruckpumpe auszugehen (z.B. statisches Durchschalten der Leistungselektronik).

Im Sondermodus kann vorteilhaft gemäß weiteren vorteilhaften Ausgestaltungen der Erfindung selektiv ein dynamisches Schalten (Takten) der Leistungselektronik wie folgt erfolgen:
a) Es wird während einer definierten Anlaufzeit t a ein Muster aus An/Aus Zyklen angesteuert mit jeweils definiert Zeiten T_ein und T_aus;
b) Die Zeiten T_ein und T_aus können in Abhängigkeit von Umgebungsbedingungen variiert werden, vorteilhaft kann die Zeit T_ein abhängig von der Versorgungsspannung, beispielsweise einer Betriebsspannung in einem elektrischen Bordnetz des Fahrzeugs, (durch eine lineare Abhängigkeit oder Kennfeld) variiert werden so, daß T_ein bei kleineren Betriebsspannungen verlängert wird;
c) T_aus kann aufgrund des aktuell gemessenen Unterdruckpumpenstroms bzw. der Leistungstreibertemperatur variiert werden; und/oder
d) die Zeiten T_ein und T_aus können abhängig von der Dauer des bisherigen Anlaufs bzw. des Ansteuerungsverlaufs variiert werden, so kann vorteilhaft mit zunehmender Zeit T nach Start der Unterdruckpumpenaktivierung die Zeit T_ein erhöht und die Zeit T_aus verkürzt werden, wobei die Gesamtdauer T_ein + T_aus ebenso variabel sein kann.

Gemäß einer weiteren vorteilhaften Ausgestaltung der Erfindung wird das Zeitverhalten über ein Modell bzw. ein Kennfeld festgelegt.

Gemäß einer weiteren vorteilhaften Ausgestaltung der Erfindung liegt die Größenordnung der Zeiten T_ein bzw. T_aus im Sekunden bzw. 100ms Bereich.

Gemäß einer weiteren vorteilhaften Ausgestaltung der Erfindung soll aufgrund der Sicherheitsrelevanz im Falle eines gewählten Sondermodus (Unterdruckpumpe läuft nicht mit voller Leistung /Unterdruck ist nicht ausreichend verfügbar) eine Fahrerinformation bzw. eine akustische, optische oder kombinierte Warnmeldung, beispielsweise ein Hinweis in der Instrumententafel, akustischer Gong oder Warnlampe, ausgegeben wird.

Gemäß einer weiteren vorteilhaften Ausgestaltung der Erfindung sollen aufgrund der Sicherheitsrelevanz im Falle eines gewählten Sondermodus (Unterdruckpumpe läuft nicht mit voller Leistung /Unterdruck ist nicht ausreichend verfügbar) übergeordnete Fahrsysteme informiert werden, so daß diese in eine Art Notlaufprogramm wechseln (z.B. Motormomentenreduzierung, Bremsdruckaufbau im Masterzylinder durch Hydraulikpumpe, Gangrestriktion in Automatikgetrieben, etc.)

Somit erlaubt es das erfindungsgemäße Verfahren zur Anlaufsteuerung einer elektrischen Unterdruckpumpe, die Dimensionierung der die Unterdruckpumpe ansteuernden Elektronik kostengünstiger, platzsparender, energieeffizienter und temperaturunabhängiger auszulegen ohne die Funktionsbereitschaft der Unterdruckpumpe zu reduzieren. Gleichzeitig wird die Lebensdauer der Komponenten in Folge geringerer Beanspruchung erhöht.

Die Erfindung erlaubt es, eine einfache Ansteuerung unter Berücksichtigung von Parametern so zu gestalten, daß keine zusätzlichen Kosten für Hardware entstehen und zugleich technische Merkmale der Automobilindustrie z.B. EMV Werte, Betriebsbereich eingehalten werden können.

Nachfolgend werden einige Ausführungsbeispiele der Erfindung anhand der Zeichnung näher erläutert. Es zeigen:
Figur 1 ein beispielhaftes Flußdiagramm für eine einstufige Auswahl zwischen Standardmodus und Sondermodus,
Figur 2 ein beispielhaftes Flußdiagramm für eine mehrstufige Auswahl zwischen Standardmodus und mehreren Anlaufmodi,
Figur 3 einen beispielhaften zeitlichen Verlauf für eine getaktete Energieversorgung der Unterdruckpumpe in einem Sondermodus,
Figur 4 eine Darstellung entsprechend Figur 3 mit einem anderen, beispielhaften Sondermodus mit anderen Taktzeiten und
Figur 5 eine Darstellung entsprechend Figur 3 mit einem anderen, beispielhaften Sondermodus mit variablen Taktzeiten.

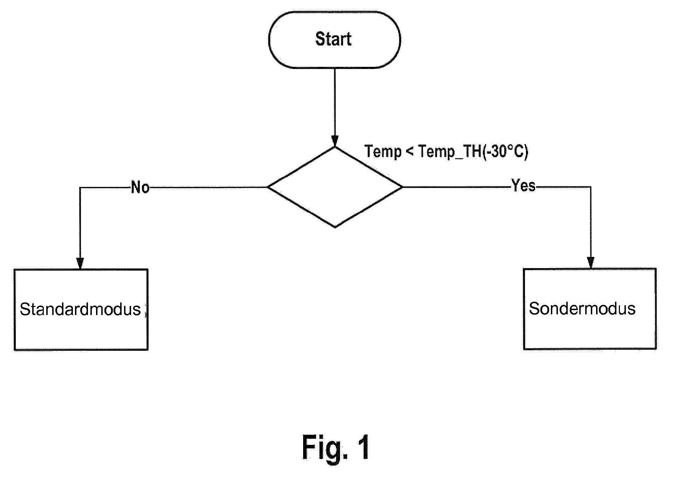

Figur 1 zeigt beispielhaft ein Flußdiagramm für eine erfindungsgemäße einstufige Auswahl zwischen einem Standardmodus und einem Sondermodus zur Steuerung des Anlaufes einer in der Figur nicht angedeuteten elektrischen Unterdruckpumpe zur Erzeugung eines Unterdruckes in einem Unterdrucksystem eines Fahrzeuges.

Um eine unerwünscht große Energieaufnahme der Unterdruckpumpe beim Anlaufen zu vermeiden, ist diese alternativ in einem Standardmodus, der dem normalen Betriebsmodus der Unterdruckpumpe entspricht, oder in wenigstens einem Sondermodus anfahrbar, welcher darauf optimiert ist, die elektrische Energie-Aufnahme der Unterdruckpumpe in der Anlaufphase nicht unerwünscht hoch werden zu lassen und in welchem die Unterdruckpumpe getaktet an eine elektrische Energiequelle geschaltet wird.

Zur Auswahl dieser Modi beim Anlaufen der Unterdruckpumpe werden erfindungsgemäß Umgebungsparameter und/oder Betriebsparameter der Unterdruckpumpe herangezogen.

Ein einfaches Beispiel mit einem Sondermodus ist in Figur 1 angedeutet. Vor dem Start der Unterdruckpumpe wird in diesem Beispiel die Umgebungstemperatur festgestellt und mit einem Schwellwert (hier - 30 Grad Celsius) verglichen. Liegt die tatsächliche Temperatur oberhalb dieses Schwellwertes, erfolgt ein Anlaufen der Unterdruckpumpe im Standardmodus, in welchen die Unterdruckpumpe ungetaktet an die elektrische Energiequelle geschaltet wird.

Liegt die gemessene Temperatur jedoch unterhalb dieses Schwellwertes, so ist mit einem besonders hohen Anlaufstrom der Unterdruckpumpe zu rechnen. Es wird daher in einen Sondermodus geschaltet, in welchem die Unterdruckpumpe in einer Anlaufphase getaktet an eine elektrische Energiequelle geschaltet wird. Dies führt zu im Mittel geringer Stromaufnahme in der Anlaufphase als wenn die Unterdruckpumpe im Standardmodus angelaufen wäre.

Es können ggf. mehrere Anlaufmodi mit verschiedenen Parametern der Taktung vorgesehen sein.

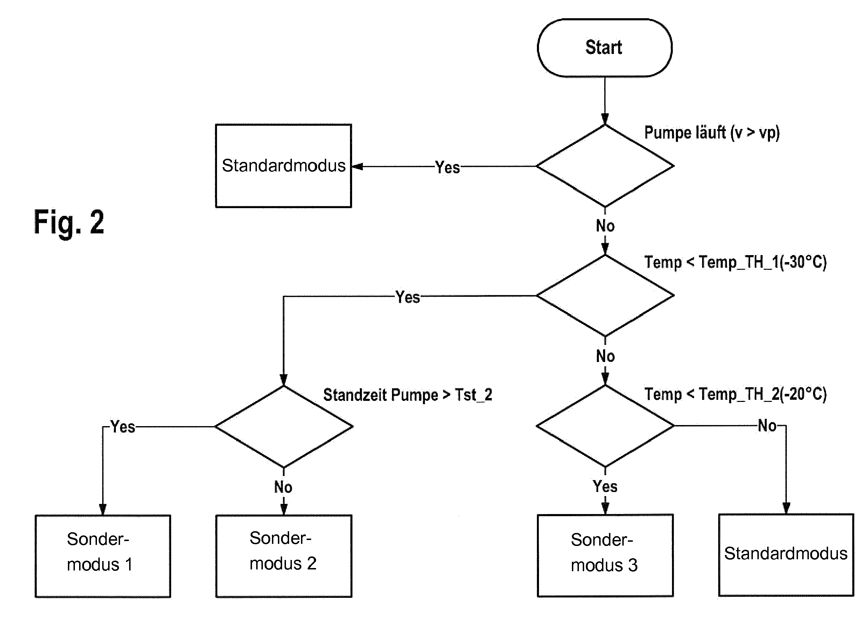

Ein solches Beispiel ist in Figur 2 dargestellt. Hier wird über mehrere Entscheidungen anhand von Umgebungsparametern und/oder Betriebsparameter der Unterdruckpumpe eine Auswahl zwischen drei verschiedenen Anlaufmodi (mit verschiedenen Taktzeiten) und einem Standardmodus durchgeführt, um eine noch bessere Adaption an die beim Anlauf der Unterdruckpumpe herrschenden Bedingungen und eine noch präzisere Begrenzung des Anlaufstromes zu erzielen.

Wenn die Unterdruckpumpe bereits läuft, wird ohnehin in den Standardmodus geschaltet. Läuft sie nicht, soll also ein Anlaufen der Unterdruckpumpe durchgeführt werden, so wird zunächst, ähnlich wie in dem Beispiel gemäß Figur 1, festgestellt, ob die Umgebungstemperatur unter- oder oberhalb eines Schwellwertes (hier - 30 Grad Celsius) liegt.

Liegt die tatsächliche Temperatur unterhalb dieses Schwellwertes, so wird in einer weiteren Entscheidung festgestellt, ob die Standzeit der Unterdruckpumpe länger als eine vorgebbare Zeit betragen hat. Ist dies der Fall, wird ein Sondermodus 1 gewählt; andernfalls wird ein Sondermodus 2 gewählt.

Liegt die tatsächliche Temperatur oberhalb des Schwellwertes -30 Grad Celsius, so wird in einer weiteren Entscheidung festgestellt, ob die Umgebungstemperatur unter- oder oberhalb eines zweiten Schwellwertes (hier - 20 Grad Celsius) liegt. Ist dies der Fall, wird ein Sondermodus 3 gewählt; andernfalls wird ein Anlaufen in dem Standardmodus durchgeführt.

Die Anlaufmodi 1 bis 3 sind dabei so ausgestaltet, dass die Taktung der Unterdruckpumpe im Sondermodus 1 so ausgestaltet ist, dass die Unterdruckpumpe während relativ kurzer Taktzeiten an die Energiequelle geschaltet ist, wohingegen die Unterdruckpumpe im Sondermodus 3 während relativ längerer Taktzeiten an die Energiequelle geschaltet ist. Im Sondermodus 2 ist eine mittlere Taktdauer gewählt.

Die Taktzeiten, während der die Unterdruckpumpe an die Energiequelle geschaltet ist, können also verschieden gewählt werden und können auch variabel sein.

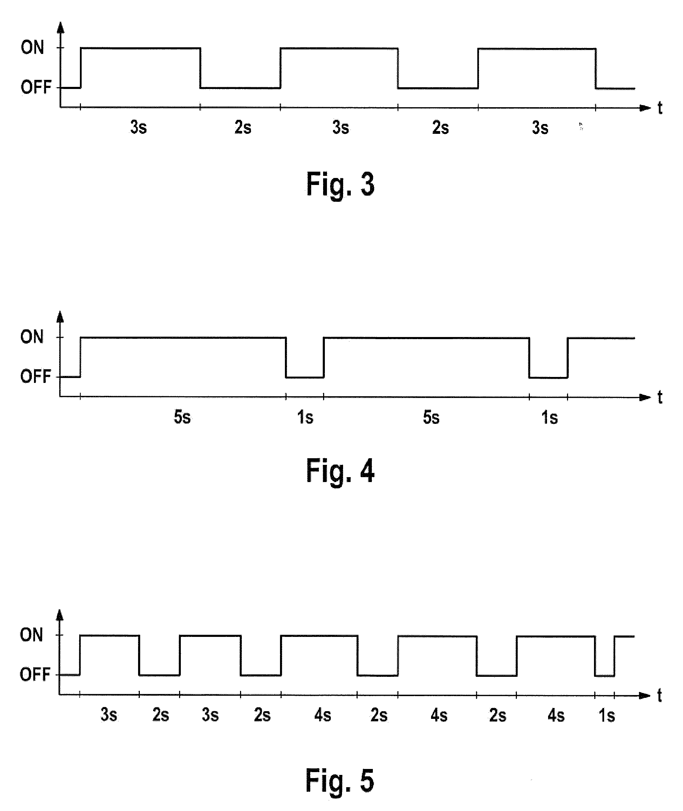

Einige Beispiele hierfür zeigen die zeitlichen Taktverläufe der Figuren 3 bis 5.

Figur 3 zeigt beispielhaft einen Taktverlauf eines Sondermodus über der Zeit. Während der (positiven) Impulse ist die Unterdruckpumpe in einem Anlauf an eine Energiequelle geschaltet, während der low-Phasen jedoch nicht. Dadurch wird erreicht dass die Unterdruckpumpe im Mittel einen niedrigeren Strom aufnimmt, als wenn sie ständig an die Energiequelle geschaltet wäre.

In Figur 4 ist ein zeitlicher Verlauf entsprechend demjenigen in Figur 3 dargestellt, jedoch mit etwas längeren Einschaltphasen der Unterdruckpumpe. Ein solcher Sondermodus könnte zum Beispiel dann gewählt werden, wenn die Umgebungsparameter und/oder Betriebsparameter der Unterdruckpumpe einen geringeren Anlaufstrom als die Parameter, bei deren Vorliegen der Sondermodus gemäß Figur 3 gewählt wird, erwarten lassen.

Die Einschaltzeiten in der Taktung können auch variabel und/oder zeitabhängig veränderbar gewählt werden.

Ein solches Beispiel zeigt Figur 5. Dort werden die Einschaltphasen im Laufe des Anlaufes immer länger. Dies ist beispielsweise dann vorteilhaft, wenn die Temperatur der Unterdruckpumpe beim Anlauf zunächst sehr niedrig ist und sich im Laufe des Anlaufes sukzessive erhöht.

Die Beispiele der Figuren 1 bis 5 zeigen, dass das erfindungsgemäße Verfahren zum Anlaufen einer Unterdruckpumpe eine sehr variable Anpassung an die vorliegenden baulichen und Umgebungs-Bedingungen zulässt.

## Patentansprüche

1. Verfahren zur Steuerung eines Anlaufes einer elektrischen Unterdruckpumpe für ein Unterdrucksystem eines Fahrzeuges,
**dadurch gekennzeichnet, dass** der Anlauf nach wenigstens zwei unterschiedlichen Anlaufmodi erfolgen kann, nämlich nach einem Standardmodus und nach wenigstens einem Sonder-modus, wobei
- im Standardmodus die Unterdruckpumpe ungetaktet an eine Versorgungsspannung geschaltet ist,
- im Sondermodus die Unterdruckpumpe dynamisch getaktet an eine Versorgungsspannung geschaltet ist,
und wobei der Anlauf der Unterdruckpumpe in dem Sondermodus vorgenommen wird, wenn Umgebungsparameter und/oder Betriebsparameter der Unterdruckpumpe zu einem Anlauf mit unerwünscht hoher Stromaufnahme führen würden und andernfalls ein Anlauf in dem Standardmodus erfolgt.

2. Verfahren nach Anspruch 1, **dadurch gekennzeichnet, dass** der Anlauf der Unterdruckpumpe in dem Sondermodus vorgenommen wird, wenn eine Temperatur der Unterdruckpumpe kleiner als ein Schwellwert T_p ist.

3. Verfahren nach Anspruch 1 oder 2, **dadurch gekennzeichnet, dass** der Anlauf der Unterdruckpumpe in dem Sondermodus vorgenommen wird, wenn eine Temperatur einer elektronischen Steuerung (ECU) kleiner als ein Schwellwert T_e ist.

4. Verfahren nach einem der Ansprüche 1 bis 3, **dadurch gekennzeichnet, dass** der Anlauf der Unterdruckpumpe in dem Sondermodus vorgenommen wird, wenn eine Temperatur der Leistungstreiber der elektronischen Steuerung größer als ein Schwellwert T_l ist.

5. Verfahren nach einem der Ansprüche 1 bis 4, **dadurch gekennzeichnet, dass** der Anlauf der Unterdruckpumpe in dem Sondermodus vorgenommen wird, wenn eine Standzeit der Unterdruckpumpe größer als ein Schwellwert T_sz ist, wobei die Standzeit zeitlich unmittelbar einem Zeitpunkt des Anlaufs vorausgeht.

6. Verfahren nach einem der Ansprüche 1 bis 5, **dadurch gekennzeichnet, dass** der Anlauf der Unterdruckpumpe in dem Sondermodus vorgenommen wird, wenn ein Wakeup-Management Info angibt, daß die Unterdruckpumpe nach einem Aufwachen oder nach einem Klemmenwechsel noch nicht betrieben wurde.

7. Verfahren nach einem der Ansprüche 1 bis 6, **dadurch gekennzeichnet, dass** der Anlauf der Unterdruckpumpe in dem Sondermodus vorgenommen wird, wenn eine Umgebungstemperatur kleiner als ein Schwellwert T_u ist.

8. Verfahren nach einem der Ansprüche 1 bis 7, **dadurch gekennzeichnet, dass** der Anlauf der Unterdruckpumpe in dem Sondermodus vorgenommen wird, wenn eine aktuelle Anlaufgeschwindigkeit/-Drehzahl bei dem Anlauf der Unterdruckpumpe unterhalb eines Schwellwertes v_p liegt.

9. Verfahren nach einem der Ansprüche 1 bis 8, **dadurch gekennzeichnet, dass** der Anlauf der Unterdruckpumpe in dem Sondermodus vorgenommen wird, wenn ein in dem Unterdrucksystem gemessene Unterdruck geringer als ein Schwellwert p_vac_th ist.

10. Verfahren nach einem der Ansprüche 1 bis 9, **dadurch gekennzeichnet, dass** der Anlauf der Unterdruckpumpe in dem Sondermodus vorgenommen wird, wenn eine laufende Veränderung eines in dem Unterdrucksystem gemessenen Unterdrucks bei dem Anlauf der Unterdruckpumpe oberhalb eines Schwellwertes p_vac_grad_th liegt.

11. Verfahren nach einem der Ansprüche 1 bis 10, **dadurch gekennzeichnet, dass** mehrere unterschiedliche Anlaufmodi eingesetzt werden,
- wenn Umgebungsparameter und/oder Betriebsparameter gestufte Schwellwerte und/oder vorgebbare Kombinationen der Schwellwerte unter- oder überschreiten.

12. Verfahren nach einem der Ansprüche 1 bis 11, **dadurch gekennzeichnet, dass** der Sondermodus verlassen wird sobald:
- eine Ansteuerung der Unterdruckpumpe im Sondermodus bereits während einer Dauer T_enh erfolgt ist und/oder
- eine Indikation vorliegt, dass die Unterdruckpumpe innerhalb normaler Parameter läuft, vorzugsweise anhand der Werte von Unterdruckpumpendrehzahl, aktuellen Strom/ Stromverlauf, Unterdruckpumpentemperatur, Unterdruck/ Unterdruckgradient.

13. Verfahren nach einem der Ansprüche 1 bis 12, **dadurch gekennzeichnet, dass** während einer definierten Anlaufzeit t_a eine Ansteuerung der Unterdruckpumpe nach einem Muster aus AN/AUS Zyklen mit jeweils definierten Zeiten T_ein und T_aus erfolgt, wobei die Zeiten T_ein und T_aus in Abhängigkeit von Umgebungsbedingungen variiert werden.

14. Verfahren nach Anspruch 13, **dadurch gekennzeichnet, dass** die Zeit T_ein abhängig von einem Wert der Versorgungsspannung gewählt wird, wobei T_ein bei kleineren Versorgungsspannungswerten länger als bei höheren Versorgungsspannungswerten gewählt wird.

15. Verfahren nach Anspruch 13 oder 14, **dadurch gekennzeichnet, dass** die Zeit T_ein abhängig von einem aktuell gemessenen Unterdruckpumpenstrom und/oder einer Temperatur eines Leistungstreibers der Unterdruckpumpe variabel gewählt wird.

16. Verfahren nach Anspruch 13 oder 14, **dadurch gekennzeichnet, dass** die Zeit T_aus abhängig von einer aktuell gemessenen Temperatur der elektronischen Steuerung (ECU) T_e und/oder einer Leistungstreibertemperatur variabel gewählt wird.

17. Verfahren nach einem der Ansprüche 13, 14, 15 oder 16, **dadurch gekennzeichnet, dass** die Zeiten T ein und T aus in Abhängigkeit einer aktuellen Dauer des Anlaufs variiert werden, wobei vorzugsweise mit zunehmender Zeit T nach Beginn des Anlaufs die Zeit T ein erhöht und die Zeit T_aus verkürzt werden, wobei vorzugsweise die Gesamtdauer T_ein + T_aus variabel ist.

18. Verfahren nach einem der Ansprüche 13 bis 17, **dadurch gekennzeichnet, dass** die Zeiten T_ein und T_aus mittels eines Modells oder eines Kennfeldes festgelegt werden.

19. Verfahren nach einem der Ansprüche 13 bis 18, **dadurch gekennzeichnet, dass** die Zeiten T ein in einer Größenordnung von annähernd einigen Sekunden und die Zeiten T_aus in einer Größenordnung von annähernd einigen Hunderten Millisekunden liegen.

20. Verfahren nach einem der Ansprüche 1 bis 19, **dadurch gekennzeichnet, dass** bei aktiviertem Sondermodus nach einer vorgebbaren Zeitdauer eine Fahrerinformation, vorzugsweise eine akustische und/oder optische Warnmeldung, ausgeben wird.

21. Verfahren nach einem der Ansprüche 1 bis 20, **dadurch gekennzeichnet, dass** bei aktiviertem Sondermodus nach einer vorgebbaren Zeitdauer übergeordnete Fahrsysteme informiert werden, so daß diese in ein Notlaufprogramm wechseln.

## Claims

1. Method for controlling a start-up process of an electric vacuum pump for a vacuum system of a vehicle, **characterized in that** the start-up process can be implemented in at least two different start-up modes, namely in a standard mode and in at least one special mode, wherein
- in the standard mode, the vacuum pump is connected to a supply voltage in a non-pulsed manner,
- in the special mode, the vacuum pump is connected to a supply voltage in a dynamically pulsed manner,
and wherein the start-up process of the vacuum pump is conducted in the special mode if environmental parameters and/or operating parameters of the vacuum pump would lead to a start-up process consuming an undesirably large amount of power and otherwise a start-up process is performed in the standard mode.

2. Method according to Claim 1, **characterized in that** the start-up process of the vacuum pump is conducted in the special mode if a temperature of the vacuum pump is lower than a threshold value T_p.

3. Method according to Claim 1 or 2, **characterized in that** the start-up process of the vacuum pump is conducted in the special mode if a temperature of an electronic control unit (ECU) is lower than a threshold value T_e.

4. Method according to any one of Claims 1 to 3, **characterized in that** the start-up process of the vacuum pump is conducted in the special mode if a temperature of the power driver of the electronic control device is higher than a threshold value T_1.

5. Method according to any one of Claims 1 to 4, **characterized in that** the start-up process of the vacuum pump is conducted in the special mode if an idle time period of the vacuum pump is longer than a threshold value T_sz, wherein the idle time period immediately precedes with respect to time a point in time of the start-up process.

6. Method according to any one of Claims 1 to 5, **characterized in that** the start-up process of the vacuum pump is conducted in the special mode if wake-up management information indicates that the vacuum pump has not yet been operated after a wake-up process or after a clamp change.

7. Method according to any one of Claims 1 to 6, **characterized in that** the start-up process of the vacuum pump is conducted in the special mode if an ambient temperature is lower than a threshold value T_u.

8. Method according to any one of Claims 1 to 7, **characterized in that** the start-up process of the vacuum pump is conducted in the special mode if a prevailing start-up speed/rotational speed during a start-up process of the vacuum pump is lower than a threshold value v_p.

9. Method according to any one of Claims 1 to 8, **characterized in that** the start-up process of the vacuum pump is conducted in the special mode if a vacuum that is measured in the vacuum system is lower than a threshold value p_vac_th.

10. Method according to any one of Claims 1 to 9, **characterized in that** the start-up process of the vacuum pump is conducted in the special mode if a prevailing change in a vacuum that is measured in the vacuum system during the start-up process of the vacuum pump is higher than a threshold value p_vac_grad_th.

11. Method according to any one of Claims 1 to 10, **characterized in that** multiple different start-up process modes are used,
- if environmental parameters and/or operating parameters are below or exceed stepped threshold values and/or predefinable combinations of the threshold values.

12. Method according to any one of Claims 1 to 11, **characterized in that** the special mode is abandoned as soon as:
- a process of controlling the vacuum pump in the special mode is already implemented during a time period T_enh, and/or
- information indicates that the vacuum pump is running within normal parameters, preferably with reference to the values of vacuum pump rotational speed, prevailing power/current curves, vacuum pump temperature, vacuum/vacuum gradient.

13. Method according to any one of Claims 1 to 12, **characterized in that** during a defined start-up process period t_a a process of controlling the vacuum pump is performed according to a pattern of ON/OFF cycles having in each case defined times T_on and T_off, wherein the times T_on and T_off are varied in dependence upon environmental conditions.

14. Method according to Claim 13, **characterized in that** the time T_on is selected in dependence upon a value of the supply voltage, wherein T_on is selected in the case of smaller supply voltage values for a longer period of time than in the case of higher supply voltage values.

15. Method according to Claim 13 or 14, **characterized in that** the time T_on is selected in a variable manner in dependence upon a prevailing measured vacuum pump power and/or a temperature of a power driver of the vacuum pump.

16. Method according to Claim 13 or 14, **characterized in that** the time T_off is selected in a variable manner in dependence upon a prevailing measured temperature of the electronic control unit (ECU) T_e and/or a power driver temperature.

17. Method according to any one of Claims 13, 14, 15 or 16, **characterized in that** the times T_on and T_off are varied in dependence upon a prevailing duration of the start-up process, wherein the time T_on is increased preferably with the increasing time T after the commencement of the start-up process and the time T_off is shortened, wherein preferably the total time T_on + T_off is variable.

18. Method according to any one of Claims 13 to 17, **characterized in that** the times T_on and T_off are established by means of a model or a characteristic field.

19. Method according to any one of Claims 13 to 18, **characterized in that** the times T_on are on a scale of approximately a few seconds and the times T_off are on a scale of approximately a few hundred milliseconds.

20. Method according to any one of Claims 1 to 19, **characterized in that** in the case of an activated special mode information for the vehicle driver is output after a predefinable period of time and said information is preferably an acoustic and/or optical warning.

21. Method according to any one of Claims 1 to 20, **characterized in that** in the case of an activated special mode higher-ranking vehicle drive systems are informed after a predefinable period of time so that said systems switch into an emergency program.

## Revendications

1. Procédé de commande d'un démarrage d'une pompe électrique à dépression pour un système à dépression d'un véhicule,
**caractérisé en ce que** le démarrage peut s'effectuer conformément à moins de deux modes de démarrage différents, à savoir conformément à un mode standard et conformément à au moins un mode spécial, dans lequel
- en mode standard, la pompe à dépression est connectée de manière non cadencée à une tension d'alimentation,
- en mode spécial, la pompe à dépression est connectée de manière cadencée dynamiquement à une tension d'alimentation,
et dans lequel le démarrage de la pompe à dépression est effectué en mode spécial si des paramètres d'environnement et/ou des paramètres de fonctionnement de la pompe à dépression conduisent à un démarrage provoquant une consommation de courant supérieure de manière indésirable, un démarrage étant autrement effectué en mode standard.

2. Procédé selon la revendication 1, **caractérisé en ce que** le démarrage de la pompe à dépression est effectué en mode spécial si une température de la pompe à dépression est inférieure à une valeur de seuil T_p.

3. Procédé selon la revendication 1 ou 2, **caractérisé en ce que** le démarrage de la pompe à dépression est effectué en mode spécial si une température d'une unité de commande électronique (ECU) est inférieure à une valeur de seuil T_e.

4. Procédé selon l'une quelconque des revendications 1 à 3, **caractérisé en ce que** le démarrage de la pompe à dépression est effectué en mode spécial si une température du circuit d'attaque de puissance de l'unité de commande électronique est supérieure à une valeur de seuil T_l.

5. Procédé selon l'une quelconque des revendications 1 à 4, **caractérisé en ce que** le démarrage de la pompe à dépression est effectué en mode spécial si un temps d'attente de la pompe à dépression est supérieur à une valeur de seuil T_sz, le temps d'attente précédant immédiatement un instant du démarrage.

6. Procédé selon l'une quelconque des revendications 1 à 5, **caractérisé en ce que** le démarrage de la pompe à dépression est effectué en mode spécial si une information de gestion d'éveil indique que la pompe à dépression n'a pas encore été mise en fonctionnement après un éveil ou après un changement de borne.

7. Procédé selon l'une quelconque des revendications 1 à 6, **caractérisé en ce que** le démarrage de la pompe à dépression est effectué en mode spécial si une température ambiante est inférieure à une valeur de seuil T_u.

8. Procédé selon l'une quelconque des revendications 1 à 7, **caractérisé en ce que** le démarrage de la pompe à dépression est effectué en mode spécial si une vitesse de démarrage/vitesse de rotation de démarrage, lors du démarrage de la pompe à dépression, se situe en dessous d'une valeur de seuil v_p.

9. Procédé selon l'une quelconque des revendications 1 à 8, **caractérisé en ce que** le démarrage de la pompe à dépression est effectué en mode spécial si une dépression mesurée dans le système de dépression est inférieure à une valeur de seuil p_vac_th.

10. Procédé selon l'une quelconque des revendications 1 à 9, **caractérisé en ce que** le démarrage de la pompe à dépression est effectué en mode spécial si une modification en cours d'une dépression mesurée dans le système de dépression, lors du démarrage de la pompe à démarrage, se situe au-dessus d'une valeur de seuil p_vac_grad_th.

11. Procédé selon l'une quelconque des revendications 1 à 10, **caractérisé en ce qu'**une pluralité de modes de démarrage différents sont mis en ouvre,
- si des paramètres ambiants et/ou des paramètres de fonctionnement dépassent en sens décroissant ou croissant des valeurs de seuil échelonnées et/ou des combinaisons pouvant être prédéterminées desdites valeurs de seuil.

12. Procédé selon l'une quelconque des revendications 1 à 11, **caractérisé en ce que** le mode spécial est abandonné :
- lorsqu'une commande de la pompe à dépression a déjà été effectuée en mode spécial pendant une durée T_enh et/ou
- dès qu'une indication est présente, selon laquelle la pompe à dépression fonctionne dans une gamme de paramètres normaux, de préférence sur la base des valeurs de la vitesse de rotation de la pompe à dépression, du courant/de la courbe de courant effective, de la température de la pompe à dépression, de la dépression/du gradient de dépression.

13. Procédé selon l'une quelconque des revendications 1 à 12, **caractérisé en ce que**, pendant un temps de démarrage défini t_a, une commande de la pompe à dépression est effectuée conformément à une configuration constituée de cycles de marche/arrêt ayant des temps respectifs définis T_marche et T_arrêt, dans lequel les temps T_marche et T_arrêt sont amenés à varier en fonction de conditions ambiantes.

14. Procédé selon la revendication 13, **caractérisé en ce que** le temps T_marche est sélectionné en fonction d'une valeur de la tension d'alimentation, dans lequel T_marche est sélectionné de manière à être plus long pour des valeurs inférieures de la tension d'alimentation que pour des valeurs supérieures de la tension d'alimentation.

15. Procédé selon la revendication 13 ou 14, **caractérisé en ce que** le temps T_marche est sélectionné de manière à varier en fonction d'un courant de pompe à dépression effectif mesuré et/ou d'une température d'un circuit d'attaque de puissance de la pompe à dépression.

16. Procédé selon la revendication 13 ou 14, **caractérisé en ce que** le temps T_arrêt est sélectionné de manière à varier en fonction d'une température effective mesurée T_e de l'unité de commande électronique (ECU) et/ou d'une température du circuit d'attaque de puissance.

17. Procédé selon l'une quelconque des revendications 13, 14, 15 ou 16, **caractérisé en ce que** les temps T_marche et T_arrêt sont amenés à varier en fonction d'une durée effective du démarrage, dans lequel le temps T_marche croît de préférence lorsque le temps T s'écoulant après le début du démarrage diminue et le temps T_arrêt est réduit, dans lequel la durée totale T_marche + T_arrêt est de préférence variable.

18. Procédé selon l'une quelconque des revendications 13 à 17, **caractérisé en ce que** les temps T_marche et T_arrêt sont fixés au moyen d'un modèle ou d'un champ caractéristique.

19. Procédé selon l'une quelconque des revendications 13 à 18, **caractérisé en ce que** les temps T_marche ont un ordre de grandeur d'environ quelques secondes et **en ce que** les temps T_arrêt ont un ordre de grandeur d'environ quelques centaines de millisecondes.

20. Procédé selon l'une quelconque des revendications 1 à 19, **caractérisé en ce que** lorsque le mode spécial est activé après un intervalle de temps pouvant être prédéterminé, une information concernant le conducteur, de préférence un message d'alarme acoustique et/ou optique, est délivrée.

21. Procédé selon l'une quelconque des revendications 1 à 20, **caractérisé en ce que** lorsque le mode spécial est activé après un intervalle de temps pouvant être prédéterminé, des systèmes de conduite d'ordre supérieur sont informés de manière à basculer sur un programme de secours.
